# EUROPEAN PATENT APPLICATION

(11) **EP 4 656 771 A1**
(43) Date of publication of application: **03.12.2025**
(21) Application number: 24178834.8
(22) Date of filing: 29.05.2024
(51) Int. Cl.: C25B 1/04, C25B 15/08, B63B 35/44, C25B 1/042, E02B 17/00, B65D 88/78

(54) **A FLOATING HYDROGEN PRODUCTION PLANT AND AN OFFSHORE HYDROGEN PRODUCTION SYSTEM**

(71) Applicant: SolarDuck Holding B.V., 3012 CA Rotterdam (NL)
(72) Inventor: HUISKAMP, Ewoud, 2623 MK Delft (NL); HOOGENDOORN, Cornelis Frans Donald, 2803 AW Gouda (NL)
(74) Representative: De Vries & Metman

(57) **Abstract**

A floating hydrogen production plant (2) comprises a plurality of interconnected floating platforms (6) which are movable with respect to each other. Each floating platform (6) comprises a floating member (7). The floating member (7) of at least one floating platform (6) has an internal chamber (8) for storing hydrogen. Each of the floating platforms (6) is provided with a plurality of hydrogen production devices (3) for producing hydrogen by electrolysis of water in the ambient air through solar energy. The hydrogen production devices (3) have respective hydrogen ports which are fluidly connectable to the internal chamber (8) of the floating member (7) of the at least one floating platform (6).

## Description

The present invention relates to a floating hydrogen production plant.

Such a floating hydrogen production plant is known in the prior art. A floating hydrogen production plant provides the opportunity to produce hydrogen at an offshore location, which is relatively safe. Furthermore, large free areas are available offshore which provides the opportunity to apply solar energy for producing hydrogen through electrolysis.

An object of the invention is to provide an improved floating hydrogen production plant.

This object is accomplished with the floating hydrogen production plant according to the invention, which comprises a plurality of interconnected floating platforms which are movable with respect to each other, wherein each floating platform comprises a floating member, wherein the floating member of at least one floating platform has an internal chamber for storing hydrogen, wherein each of the floating platforms is provided with a plurality of hydrogen production devices for producing hydrogen by electrolysis of water in the ambient air through solar energy, wherein the hydrogen production devices have respective hydrogen ports which are fluidly connectable to the internal chamber of the floating member of the at least one floating platform.

The hydrogen production devices function on the basis of vapour phase water electrolysis, which is a well-known technology as such. The floating hydrogen production plant according to the invention operates efficiently under offshore conditions since average humidity level above a water surface is relatively high. An advantage of the floating hydrogen production plant according to the invention is that produced hydrogen can be stored in the internal chamber of the floating member of the at least one floating platform such that it can be transferred to an on shore location through a pipe or a ship, for example. Hence, the floating member has two functions: keep the floating platform floating and storing hydrogen.

The hydrogen production devices may be direct air electrolysis units (DAE units).

The floating member of the at least one floating platform may have a single internal chamber.

The floating member of the at least one floating platform may be elongate in vertical direction. A lower portion of the floating member may be submerged in the water, whereas an upper portion thereof may be located above water level. The upper portion of the floating member may be part of a truss-shaped supporting structure for supporting the PV panels, which is also located above water level.

The height to width ratio of the floating member may be larger than 5, preferably 10.

The floating hydrogen production plant may be configured such that under operating conditions maximum pressure in the internal chamber of the floating member of the at least one floating platform is lower than 20 bar, which means that piping and the internal chamber may have a relatively simple structure because of the relatively low pressure level.

Preferably, the floating member of the at least one floating platform has a single-walled casing which also forms a single-walled casing of the internal chamber, since this provides a relatively simple mechanical structure. The internal chamber does not require a separate liner, but its casing coincides with the single-walled casing of the floating member. Hence, it is not necessary to fix a separate hydrogen storage container inside the floating member.

The single-walled casing may be made of aluminium, steel, carbon or a fibre reinforced composite.

The hydrogen production devices may be bi-directional for producing electricity in case of supplying hydrogen to the hydrogen ports. In this case hydrogen may be supplied from the floating member of the at least one floating platform to the hydrogen ports of the respective hydrogen production devices which convert the hydrogen to electricity.

In an embodiment a plurality of the floating members have an internal chamber, wherein the internal chambers are fluidly connectable to each other.

The hydrogen production devices may be bi-directional for producing electricity in case of supplying hydrogen, which means that when auxiliary devices at the floating hydrogen production plant demand electrical power, for example, stored hydrogen can be supplied to the hydrogen production devices.

In an embodiment the floating member of the at least one floating platform is one of a plurality of similar floating members of the at least one floating platform located at a distance from each other, wherein respective internal chambers of the floating members are fluidly connectable to each other and/or fluidly connectable to the hydrogen ports. This provides increased hydrogen storage capacity. The respective internal chambers of the floating members may be fluidly connectable to each other and/or to the hydrogen ports through flexible tubes.

In an embodiment the floating members of several floating platforms are similar to the floating member of the at least one floating platform, wherein the internal chambers of the floating members are fluidly connectable to the internal chamber of the floating member of the at least one floating platform. This provides further increased hydrogen storage capacity. The internal chambers of the floating members may be fluidly connectable to the internal chamber of the floating member of the at least one floating platform through flexible tubes.

One or more of the floating platforms may be provided with PV panels for locally generating electrical power, for example for powering auxiliary devices.

The invention is also related to an offshore hydrogen production system, comprising the floating hydrogen production plant according to any one of the preceding claims, wherein the floating hydrogen production plant is a first floating hydrogen production plant, wherein the offshore hydrogen production system comprises a second floating hydrogen production plant located at a distance from the first floating hydrogen production plant, which second floating hydrogen production plant includes a plurality of interconnected floating platforms which are movable with respect to each other whereas each floating platform of the second floating hydrogen production plant comprises a floating member including an internal chamber for storing hydrogen, which are fluidly connectable to the internal chamber of the floating member of the at least one floating platform of the first floating hydrogen production plant. The first and second floating hydrogen production plants may be similar. The internal chambers of the floating members of the second floating hydrogen production plant may be fluidly connectable to the internal chamber of the floating member of the at least one floating platform of the first floating hydrogen production plant through flexible tubes.

The distance between the first and second floating hydrogen production plants may be larger than half of the maximum width of one of the first and second floating hydrogen production plants or larger than 100m.

The invention will hereafter be elucidated with reference to very schematic drawings showing an embodiment of the invention by way of example.
Fig. 1 is an illustrative view of an embodiment of an offshore hydrogen generation system according to the invention.
Fig. 2 is a perspective view of two interconnected floating platforms of the offshore hydrogen generation system as shown in Fig. 1.

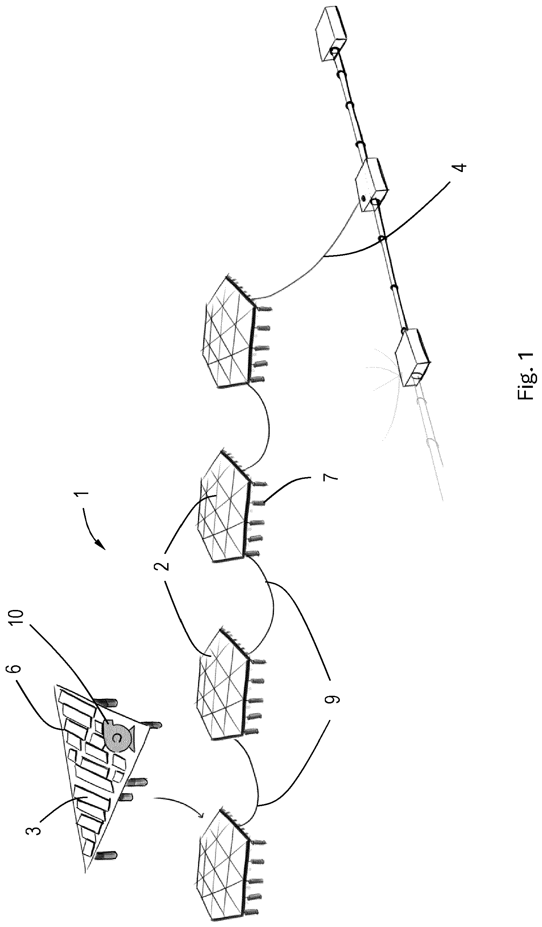

Fig. 1 shows an offshore hydrogen generation system 1 including a string of interconnected floating hydrogen production plants 2 that are provided with panel-shaped direct air electrolysis units in the form of DAE panels 3 for producing hydrogen by electrolysis of water in the ambient air.

The DAE panels 3 function on the basis of vapour phase water electrolysis, which is a well-known technology as such. Water vapour captured from the ambient air is stored in a porous matrix material. Pore volume of the porous matrix material by hygroscopic nature can serve as a water reservoir for feeding water molecules to a reaction chamber for performing the water splitting reactions. In practice during daytime, the porous matrix material may supply all the needed water for hydrogen and oxygen production without requiring external water input. Hydrogen produced by the DAE panels 3 can be transported through a pipe 4 to a ship (not shown). It is also possible to transport the produced hydrogen directly through a pipe to a location on shore.

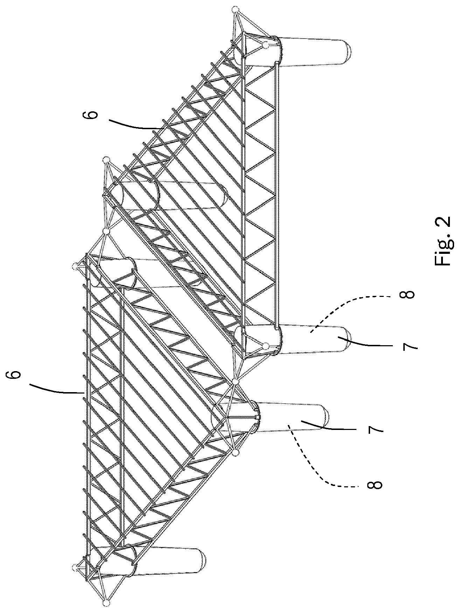

Each of the floating hydrogen production plants 2 comprises a plurality of interconnected floating platforms 6 which are movable with respect to each other through pivots. Fig. 2 shows two of the floating platforms 6 for supporting the DAE panels 3. In this case the floating platforms 6 have triangular shapes which are coupled to each other such that each floating hydrogen production plant 2 has a hexagonal shape. The floating platforms 6 and the floating hydrogen production plants 2 may have different shapes in an alternative embodiment. The floating hydrogen production plants 2 are anchored to the sea bottom at a distance from each other, for example 100m from each other. The DAE panels 3 at each floating platform 6 have respective hydrogen ports which are fluidly connected or connectable to each other.

Each floating platform 6 comprises a plurality of floating members 7, in this case three floating members 7 which are located at respective corners of each floating platform 6. Each of the floating members 7 is elongate in vertical direction and is hollow so as to form an internal chamber 8 which is suitable for storing hydrogen. The height to width ratio of the respective floating members is larger than 5. A lower portion of each floating member 7 is submerged in the water, whereas an upper portion thereof is located above water level. The upper portions of the floating members 7 of each floating platform 6 are part of a truss-shaped supporting structure for supporting the DAE panels 3, which is also located above water level.

The DAE panels 3 at each floating platform 6 are fluidly connected to the internal chambers 8 of the floating members 7. The internal chambers 8 of the floating members 7 of several floating platforms 6 are also fluidly connectable to each other. Furthermore, the internal chambers 8 of the floating members 7 of the different floating hydrogen production plants 2 are fluidly connected or connectable to each other through flexible tubes 9.

One or more of the floating platforms 6 of one or more of the floating hydrogen production plants 2 may be provided with PV panels (not shown) for locally generating electrical power to supply electrical power to auxiliary devices.

During hydrogen production hydrogen will be stored in the internal chambers 8 of the respective floating members 7 at relatively low pressure, for example 15 bar. Therefore, the hydrogen generation plant 1 is configured such that under operating conditions maximum pressure in the internal chambers 8 of the floating members 7 is lower than 20 bar. Due to the relatively low storage pressure each of the floating members 7 has a single-walled casing which also forms a single-walled casing of the internal chamber 8. Preferably, the single-walled casing is made of aluminium, but alternative materials such as steel, carbon or a fibre reinforced composite are also conceivable. Hydrogen can be transported from the DAE panels 3 to the internal chambers 8 through one or more compressors 10.

The invention is not limited to the embodiment shown in the drawings and described hereinbefore, which may be varied in different manners within the scope of the claims.

## Claims

1. A floating hydrogen production plant (2), comprising a plurality of interconnected floating platforms (6) which are movable with respect to each other, wherein each floating platform (6) comprises a floating member (7), wherein the floating member (7) of at least one floating platform (6) has an internal chamber (8) for storing hydrogen, wherein each of the floating platforms (6) is provided with a plurality of hydrogen production devices (3) for producing hydrogen by electrolysis of water in the ambient air through solar energy, wherein the hydrogen production devices (3) have respective hydrogen ports which are fluidly connectable to the internal chamber (8) of the floating member (7) of the at least one floating platform (6).

2. A floating hydrogen production plant (2) according to claim 1, wherein the hydrogen production devices are direct air electrolysis units (DAE units 3).

3. A floating hydrogen production plant (2) according to claim 1 or 2, wherein the floating member (7) of the at least one floating platform (6) is elongate in vertical direction.

4. A floating hydrogen production plant (2) according to claim 3, wherein the height to width ratio of the floating member (7) is larger than 5, preferably 10.

5. A floating hydrogen production plant (2) according to any one of the preceding claims, wherein the floating hydrogen production plant (2) is configured such that under operating conditions maximum pressure in the internal chamber (8) of the floating member (7) of the at least one floating platform (6) is lower than 20 bar.

6. A floating hydrogen production plant (2) according to any one of the preceding claims, wherein the floating member (7) of the at least one floating platform (6) has a single-walled casing which also forms a single-walled casing of the internal chamber (8).

7. A floating hydrogen production plant (2) according to claim 6, wherein the single-walled casing is made of aluminium, steel, carbon or a fibre reinforced composite.

8. A floating hydrogen production plant (2) according to any one of the preceding claims, wherein the hydrogen production devices (3) are bi-directional for producing electricity in case of supplying hydrogen to the hydrogen ports.

9. A floating hydrogen production plant (2) according to any one of the preceding claims, wherein the floating member (7) of the at least one floating platform (6) is one of a plurality of similar floating members (7) of the at least one floating platform (6) located at a distance from each other, wherein respective internal chambers (8) of the floating members (7) are fluidly connectable to each other and/or fluidly connectable to the hydrogen ports.

10. A floating hydrogen production plant (2) according to any one of the preceding claims, wherein the floating members (7) of several floating platforms (6) are similar to the floating member (7) of the at least one floating platform (6), wherein the internal chambers (8) of the floating members (7) are fluidly connectable to the internal chamber (8) of the floating member (7) of the at least one floating platform (6).

11. A floating hydrogen production plant (2) according to any one of the preceding claims, wherein one or more of the floating platforms (6) is provided with PV panels for locally generating electrical power.

12. An offshore hydrogen production system (1), comprising the floating hydrogen production plant (2) according to any one of the preceding claims, wherein the floating hydrogen production plant is a first floating hydrogen production plant, wherein the offshore hydrogen production system (1) comprises a second floating hydrogen production plant located at a distance from the first floating hydrogen production plant, which second floating hydrogen production plant includes a plurality of interconnected floating platforms (6) which are movable with respect to each other whereas each floating platform (6) of the second floating hydrogen production plant comprises a floating member (7) including an internal chamber (8) for storing hydrogen, which are fluidly connectable to the internal chamber (8) of the floating member (7) of the at least one floating platform (6) of the first floating hydrogen production plant.

13. An offshore hydrogen production system (1) according to claim 12, wherein the distance between the first and second floating hydrogen production plants (2) is larger than half of the maximum width of one of the first and second floating hydrogen production plants (2) or larger than 100m.
